Europäisches Patentamt

European Patent Office

Office européen des brevets

(11) Publication number: 0 171 154
B1

(12) EUROPEAN PATENT SPECIFICATION

(45) Date of publication of patent specification: 06.09.89

(21) Application number: 85304256.2

(22) Date of filing: 14.06.85

(51) Int. Cl.⁴: C 08 L 21/00, C 08 L 23/02, C 08 K 5/00 // (C08L21/00, 23:02),(C08L23/02, 21:00)

(54) Cured rubber blend and process for the production thereof.

(30) Priority: 25.06.84 US 624160
20.02.85 US 703290

(43) Date of publication of application:
12.02.86 Bulletin 86/07

(45) Publication of the grant of the patent:
06.09.89 Bulletin 89/36

(84) Designated Contracting States:
DE FR GB IT

(56) References cited:
GB-A- 940 126
US-A-3 179 718
US-A-4 008 190

(73) Proprietor: UNIROYAL CHEMICAL COMPANY, Inc.
World Headquarters
Middlebury Connecticut 06749 (US)

(72) Inventor: Wingrove, Donald E.
475 Juniper Lane Cheshire
New Haven Connecticut 06410 (US)

(74) Representative: Harrison, Michael Robert et al
URQUHART-DYKES & LORD 5th Floor Tower House Merrion Way
Leeds LS2 8PA West Yorkshire (GB)

(56) References cited:
RUBBER CHEMISTRY AND TECHNOLOGY, vol. 43, no. 6, 1970, pages 1294-1326, Rubber Division, A.C.S. Akron, US; S.P. MANIK et al.: "Effect of sulfur and dicumyl peroxide on vulcanization of natural rubber with tetramethylthiuram disulfide and zinc oxide", pages 1294-1310; "Sulfenamide accelerated sulfur vulcanization of natural rubber in presence and absence of dicumyl peroxide", pages 1311-1326.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Field of the invention

This invention relates to a rubber composition produced by curing a blend of (A) a highly unsaturated rubber; and (B) a saturated rubber utilizing a curing agent comprising sulfur, a sulfur cure accelerator, zinc oxide, and a peroxide curative. In another aspect, this invention relates to a process for producing said rubber composition.

### Background of the invention

It has long been the goal of the rubber industry to provide a rubber blend which combines the toughness of highly unsaturated rubbers (such as diene rubber) with the ozone resistance of saturated rubbers (such as ethylene - propylene elastomers).

In the past, producing a cured blend of highly unsaturated and saturated rubbers has been difficult, with the resulting product typically exhibiting physical properties inferior to those of such rubbers alone. This phenomenon is commonly ascribed to the co-cure incompatibility of unsaturated and saturated rubbers due to their polarity and differing degrees of saturation. In addition, migration of curatives between the saturated and unsaturated components can also lead to curing difficulties.

An important factor in the field of rubber processing is scorch time. Scorch is the premature vulcanization of rubber stock wherein the stock becomes partly vulcanized before the product is in its final form and ready for vulcanization. Scorching reduces the plastic properties of the compound so that it can no longer be processed. "Scorch time" refers to the period of time before such premature vulcanization takes place and is measured by means of a Mooney viscometer as described in ASTM standard method D-1646. It is therefore desirable that a process for the curing of a rubber composition possess a comparatively long scorch time.

United States Patent No. 3,299,175 to Marchesini et al discloses a method for the vulcanization of a mixture of (A) a saturated amorphous copolymer of ethylene and a different alpha olefin and (B) a polymeric filler obtained by the free radical polymerization of divinyl-benzene in the presence of a polymer of a conjugated diolefin. Marchesini et al disclose that a mixture of peroxide and sulfur may be employed as the vulcanizing agent, and indicate that the amount of sulfur is generally from about 0.1 to 3 gram atoms per mole of peroxide. While the use of such a mixed vulcanizing agent will cure a mixture of a highly unsaturated and a saturated rubber, as is indicated in Table V below, the Mooney scorch time of such a curing agent comprising 0.1 to 3 gram atoms sulfur per mole of peroxide is relatively low.

United States Patent No. 4,350,795 to Bohm et al discloses a process for partially curing a blend of a 1-olefin, a random styrene-butadiene rubber copolymer and a highly saturated elastomer. Bohm et al indicate that "combinations of sulfur and peroxide curatives may be utilized as well known to those skilled in the art". Although Bohm et al further indicate that other additives, including accelerators, may be employed the disclosure of this patent adds little to that of Marchesini et al as regards curing agents for blends of rubbers of differing saturation.

Consequently, it would be desirable to have a rubber composition which exhibited the toughness of highly unsaturated rubber and the ozone resistance of saturated rubber which rubber composition may be produced with a reduced risk of scorching occurring. Therefore, it is an object of this invention to provide a rubber composition which exhibits desirable strength and resistance to oxidation, which rubber may be produced with a reduced risk of scorching.

It is a further object of this invention to provide a process for the production of such a rubber composition.

The above and additional objects will become more fully apparent from the following description and Examples.

### Description of the invention

In one aspect, this invention relates to a rubber composition produced by curing a blend comprising:
(A) at least one highly unsaturated rubber having an iodine number of 50 or more,
(B) at least one saturated rubber having an iodine number of less than 50; and
(C) an effective amount of a curing agent comprising:
(i) sulfur;
(ii) at least one sulfur cure accelerator;
(iii) at least one peroxide curvative; and
(iv) zinc oxide;
wherein between 5 and 150 gram-atoms of sulfur per mole of peroxide are present.

In another aspect, this invention is directed to a process for producing a cured composition, which process comprises the steps of:
(I) preparing a blend comprising:
(A) at least one highly unsaturated rubber having an iodine number of 50 or more;
(B) at least one saturated rubber having an iodine number of less than 50; and
(C) an effective amount of a curing agent comprising:
(i) sulfur;

(ii) at least one sulfur cure accelerator;

(iii) at least one peroxide curative; and

(iv) zinc oxide;

wherein between 5 and 150 gram-atoms of sulfur per mole of peroxide is present; and

(II) subjecting said blend to curing conditions.

As is employed herein, the term "highly unsaturated rubber" refers to a rubber having an iodine number of 50 or more. The term "saturated rubber" refers to a rubber having an iodine number of less than 50, and thus encompasses rubbers having a low degree of unsaturation as well as truly unsaturated rubbers. The iodine number of a particular rubber compound may be determined in accordance with the method disclosed by S. G. Gallo, H. K. Wiese, and J. F. Nelson in "Unsaturation in Isoprene-Isobutylene Copolymers", Industrial and Engineering Chemistry, Vol. 40, pp. 1277—80 (1948).

Moreover, as is employed herein, the term "peroxide" includes hydroperoxide curatives as well as peroxide curatives.

Representative of the highly unsaturated rubbers which may be employed in the practice of this invention are diene rubbers. Such rubbers will typically possess an iodine number of between about 100 and about 250, although highly unsaturated rubbers having a higher or a lower (i.e., of 50—100) iodine number may also be employed. Illustrative of the diene rubbers which may be utilized are polymers based on conjugated dienes such as 1,3 - butadiene; 2 - methyl - 1,3 - butadiene; 1,3 - pentadiene; 2,3 - dimethyl - 1,3 - butadiene; and the like, as well as copolymers of such conjugated dienes with monomers such as styrene, alpha - methylstyrene, acrylonitrile methacrylonitrile, methyl acrylate, ethyl acrylate, methyl methacrylate, ethyl methacrylate, vinyl acetate and the like. Preferred highly unsaturated rubbers include natural rubber, cis - polyisoprene, polybutadiene, poly(styrene - butadiene) and poly(acrylonitrile - butadiene). Moreover, mixtures of two or more highly unsaturated rubbers may be employed.

Illustrative of the saturated rubbers which may be employed are copolymers of ethylene with a copolymerizable monomer having the formula $CH_2=CHR$, wherein R is $C_1—C_{10}$ alkyl. Such copolymers may contain unsaturation due to the incorporation of non-conjugated dienes such as dicyclopentadiene, 5 - ethylidene - 2 - norbornene, 1,4 - hexadiene and the like. The non-conjugated diene content of the saturated rubbers employed may range from between 0 to about 20 weight percent. Alternatively, other polymers such as butyl rubber may be employed. Moreover, mixtures of two or more saturated rubbers may be employed. The preferred saturated rubber is ethylene - propylene diene terpolymer ("EPDM").

The sulfur cure accelerators which may be employed include thioureas, such as N,N' - dibutylthiourea, 2 - mercaptoimidazoline, tetramethylthiourea and the like; guanidine derivatives, such as N,N' - diphenylguanidine and the like; xanthates, such as zinc dibutylxanthate and the like; dithiocarbamates, such as zinc dimethyldithiocarbamate, zinc diethyldithiocarbamate, zinc dibutyldithiocarbamate, zinc diethyldithiocarbamate, zinc dibutyldithiocarbamate, sodium diethyldithiocarbamate, and the like, thiuramsulfides, such as dipentamethylenethiuram disulfide, dipentamethylenethiuram hexasulfide, tetrabutylthiuram monosulfide, tetramethylthiuram monosulfide, tetraethylthiuram monosulfide, tetraethylthiuram disulfide and the like; heterocyclics, such as mercaptobenzimidazole, mercaptobenzthiazole, 2,2' - dibenzothiazyl disulfide, zinc 2 - mercaptobenzothiazole and the like; and sulfenamides, such as N - oxydiethylene - 2 - benzothiazolesulfenamide, N - t - butylbenzothiazulsulfenamide, N - cyclohexyl - 2 - benzothiazylsulfenamide, N,N - diisopropyl - 2 - benzothiazylsulfenamide and the like. Moreover, mixtures of two or more sulfur cure accelerators may be employed in the curing agent of this invention. The preferred accelerators are thiazoles and sulfenamides, with sulfenamides being particularly preferred.

Illustrative of the peroxides which may be employed are benzoyl peroxide, 1,3 - bis(t - butylperoxyisopropyl)benzene, butyl 4,4 - bis(t - butylperoxy)valerate, p - chlorobenzoyl peroxide, cumene hydroperoxide, t-butyl cumyl peroxide, t-butyl perbenzoate, di - t - butyl peroxide, dicumyl peroxide, 2,5 - dimethyl - 2,5 - di - t - butylperoxyhexane, 2,5 - dimethyl - 2,5 - di - t - butyl - peroxyhex - 3 - yne, 4 - methyl - 2,2 - di - t - butylperoxypentane and the like. Mixtures of two or more peroxides may also be employed. The preferred peroxides are dicumyl peroxide and 2,5 - dimethyl - 2,5 - di - t - butylperoxyhexane.

The curing agent of this invention comprises sulfur, at least one sulfur cure accelerator, zinc oxide and at least one peroxide curative. Between 5 and 150, preferably between 6 and 14, gram atoms of sulfur per mole of peroxide are present in said curing agent.

The sulfur cure accelerator may be present in amounts of between about 0.1 gram and about 5 grams per 100 grams of rubber, with preferably between about 0.3 gram and about 3.0 grams of accelerator per 100 grams of rubber being present. Most preferably, between about 0.3 gram and about 1.0 gram of accelerator per 100 grams of rubber are employed.

Preferably, between about 2 and about 10 grams of zinc oxide per hundred grams of rubber are employed, although amounts in excess of 10 grams may also be employed. Most preferably, between about 3 and about 5 grams of zinc oxide per 100 grams of rubber are present.

Between about 0.2 and about 5, more preferably between about 0.5 and about 3, and most preferably between about 0.5 and about 1.5 grams of sulfur per hundred grams of rubber are employed. Employing the ratios of sulfur to peroxide stated above, one skilled in the art can easily calculate the corresponding amount of particular peroxide which is to be employed.

The weight ratio of highly unsaturated rubber to saturated rubber will generally vary between about 10/90 and about 90/10. Ratios of between about 85/15 and about 60/40 are preferred for most applications, although as will be recognized by one skilled in the art, the preferred ratio will vary with the particular use to which the product is to be applied.

In addition to the highly unsaturated rubber, saturated rubber, and curing agent described above, the blends of this invention may further comprise reinforcing agents, fillers, processing aids, extender oils, plasticizers, antioxidants, ultraviolet stabilizers, and the like, all of which additional components are well known to those skilled in the rubber art.

The blend of this invention is typically prepared by first mixing all the ingredients except the curing agent in a suitable mixing device (such as a Banbury [trademark] type internal mixer, a two roll mill, or the like). Such mixing will typically require about 5 minutes, although shorter or longer mixing periods may be employed. This mixing may be performed at temperatures ranging from room temperature or cooler up to about 180°C. If mixing temperatures above the activation temperature of the curing agent are employed, upon completion of the mixing the blended rubber is cooled or allowed to cool to temperature below such activation temperature. The curing agent is then incorporated into the blend by subsequent mixing or milling.

Alternatively, the blend of this invention may be prepared by formulating a saturated component and a nonsaturated component and blending desired amounts of the two components together. In this alternative embodiment, the location of the elements of the curing agent (i.e. the peroxide, zinc oxide, sulfur and sulfur cure accelerator) is not critical, with any or all such elements being blended in either the saturated component, the unsaturated component, or both.

Vulcanization of the blend may be carried out in a press, an oven or other suitable means until crosslinking has occurred to a satisfactory state of cure.

Examples

The following Examples are intended to further illustrate the invention as claimed and are not intended to limit the scope of the invention in any manner.

Examples 1—6 and Comparative Experiments A and B

Employing the ingredients indicated in Table I, (which are listed in parts per hundred by weight) several rubber compositions were produced as follows.

A total of 100 parts by weight of a highly unsaturated rubber (Standard Malaysian natural rubber type 5CV) and saturated rubber (EPDM comprised of 52 weight percent ethylene, 39 weight percent propylene and 9 weight percent 5 - ethylidene - 2 - norbornene) in the relative amounts listed in Table I, along with 3 parts by weight of zinc oxide and 2 parts by weight antioxidant (the reaction produced of diphenylamine and acetone) were charged into a Banbury [trademark] type B internal mixer. Blending was then commenced. After 2 minutes fifty parts by weight of N326 carbon black, 5.0 parts of extender oil (type 103 oil (ASTM D2226)) and 1.0 part stearic acid were introduced into the mixer. After mixing had been continued for another 2 minutes, the inside of the mixer was swept, and blending was continued for one more minute. The blend was then removed from the mixer.

On a mill, the curing agent (comprising 1.0 part sulfur, 3.5 parts 40 weight percent active dicumylperoxide on clay Dicup 40 KE, and the amount and type sulfur curing agent indicated in Table I) was added to the mixture, with care being taken that the mixture temperature did not exceed 105°C. Thus, 6.03 gram-atoms of sulfur per mole of peroxide was employed. The compounded stock so formed was sheeted out and samples were cut.

The samples were cured at 171°C for 20 minutes, and the physical properties of such samples determined according to ASTM D412. The results of such testing are listed in Table I.

4

TABLE I
Curing of blends of rubbers

| Example | A | B | 1 | 2 | 3 | 4 | 5 | 6 |
|---|---|---|---|---|---|---|---|---|
| Highly unsaturated rubber | 100 | — | 75.0 | 50.0 | 25.0 | 50.0 | 50.0 | 50.0 |
| Low unsaturated rubber | — | 100 | 25.0 | 50.0 | 75.0 | 50.0 | 50.0 | 50.0 |
| Accelerator* (parts by weight) | I (0.75) | I (0.75) | I (0.75) | I (0.75) | I (0.75) | II (0.50) | III (1.20) | IV (2.00) |
| Tensile strength, $Kg/cm^2$ (psi) | 253 (3625) | 250 (3575) | 229 (3280) | 215 (3075) | 244 (3485) | 146 (2085) | 191 (2730) | 190 (2715) |
| 300% Modulus, $Kg/cm^2$ (psi) | 106 (1525) | 120 (1720) | 102 (1455) | 75 (1080) | 77 (1110) | 76 (1090) | 71 (1015) | 61 (875) |
| Elongation, % | 540 | 450 | 550 | 630 | 630 | 540 | 630 | 720 |
| Hardness, Shore A | 55 | 63 | 59 | 60 | 64 | 62 | 61 | 59 |

*Accelerator—I:  N-t-butyl-2-benzothiazole sulfenamide
Accelerator—II:  Tetramethylthiuram monosulfide
Accelerator—III:  Benzothiazole disulfide
Accelerator—IV:  di-o-tolylguanidine

EP 0 171 154 B1

The above data indicate that, employing the process of this invention, blends of highly unsaturated and saturated rubbers may be prepared, which blends will exhibit desirable physical properties.

Examples 7—9

Several additional rubber compositions were prepared as in Examples 1—6, except that a mixture of highly unsaturated rubbers (Standard Malaysian natural rubber type 5CV and polybutadiene rubber, 91% cis-content) were blended with the EPDM described in Examples 1—6. The ratios of rubber employed (in parts per hundred by weight) are listed in Table II. The antioxidant, carbon black, zinc oxide and stearic acid components were added in the amounts and as described in Examples 1—6. However, the amounts of extender oil (type 103 oil (ASTM D2226)), sulfur, sulfur cure accelerator (N - t - butyl - 2 - benzothiazole sulfenamide) and dicumylperoxide varied as indicated in Table II.

Samples were prepared as described in Examples 1—6. The samples were cured at 171°C for 20 minutes, and their physical properties determined according to ASTM D412. The results of such testing are recorded in Table II.

TABLE II*
Curing of blends comprising mixed
highly unsaturated rubbers

| Example | 7 | 8 | 9 |
|---|---|---|---|
| Natural rubber | 25.0 | 30.0 | 35.0 |
| Polybutadiene rubber | 25.0 | 30.0 | 35.0 |
| EPDM | 50.0 | 40.0 | 30.0 |
| Extender oil | 7.5 | 7.0 | 6.5 |
| Sulfur cure accelerator | 0.5 | 0.6 | 0.7 |
| Sulfur | 1.0 | 1.2 | 1.4 |
| Dicumyl peroxide (40% active) | 3.5 | 2.8 | 2.1 |
| Gram atom sulfur per mole peroxide | 6.03 | 9.04 | 14.1 |
| Tensile strength, Kg/cm² (psi) | 166 (2380) | 163 (2330) | 167 (2390) |
| 300% Modulus, Kg/cm² psi | 75 (1070) | 75 (1070) | 73 (1040) |
| Elongation % | 560 | 530 | 550 |

*All component data in parts by weight.

The above results further indicate that blends comprising mixtures of various saturated and highly unsaturated rubber and exhibiting desirable physical properties can be prepared employing the process of this invention.

Examples 10—12 and Comparative Experiment C

Several rubber compositions comprised of highly unsaturated standard Malaysian natural rubber (type 5CV), highly unsaturated polybutadiene (91% cis-content) rubber and saturated EPDM (comprised of 52 weight percent ethylene, 39 weight percent propylene and 9 weight percent 5 - ethylidene - 2 - norbornene) rubber were prepared using the following procedure.

Fifty parts by weight of natural rubber and 50 parts by weight of butadiene rubber, along with 3 parts zinc oxide and 2.0 parts antioxidant (the reaction product of diphenylamine and acetone) were charged to a Banbury [trademark] type B internal mixer and mixed for 2 minutes. Fifty parts N326 carbon black, 5 parts extender oil (type 103 oil—ASTM D2226) and 1.0 part stearic acid were added and mixing was continued for another 2 minutes. The inside of the mixer was swept, and blending was continued for one more minute. The blend formed thereby was introduced to a mill, where 2.0 parts sulfur and 1.0 part sulfur cure accelerator (N -t -butyl -2 -benzothiazole sulfenamide) were added. The mixture was blended, with care being taken to keep the blend temperature under 105°C, thereby forming highly unsaturated component A.

One hundred parts by weight of EPDM along with 3 parts zinc oxide were charged to a Banbury [trademark] type B internal mixer and mixed for 2 minutes. Fifty parts N326 carbon black, 5 parts extender oil (type 103 oil—ASTM D2226) and 1.0 part stearic acid were added and mixing was continued for another 2 minutes. The inside of the mixer was swept, and blending was continued for one more minute. The blend formed thereby was introduced to a mill, where 7.0 parts 40 percent active dicumyl peroxide on clay were added. The mixture was blended, with care being taken to keep the blend temperature under 105°C, thereby forming saturated component B.

Several rubber compositions were produced by blending differing amounts of highly unsaturated component A and saturated component B in the rubber ratios shown in Table III. The blends were cured at 171°C for 20 minutes. As a comparison, sample C was prepared employing a ratio of sulfur to peroxide which is outside the scope of this invention. The elastomeric, curative and Mooney scorch properties were determined. the results of such testing are summarized in Table III.

TABLE III
Rubber compositions formed from highly unsaturated
and low-saturated components

| Example | C | 10 | 11 | 12 |
|---|---|---|---|---|
| Weight percent highly unsaturated rubber* | 30 | 50 | 60 | 70 |
| Weight percent saturated rubber* | 70 | 50 | 40 | 30 |
| Parts sulfur | 0.6 | 1.0 | 1.2 | 1.4 |
| Parts sulfur cure accelerator | 0.3 | 0.5 | 0.6 | 0.7 |
| Parts peroxide (40% active) | 4.9 | 3.5 | 2.8 | 2.1 |
| Gram atoms sulfur per mole peroxide | 2.47 | 6.03 | 9.04 | 14.1 |
| Tensile strength, Kg/cm$^2$ (psi) | 239 (3410) | 203 (2900) | 180 (2580) | 175 (2500) |
| 300% Modulus, Kg/cm$^2$ (psi) | 73 (1050) | 80 (1150) | 69 (990) | 80 (1150) |
| Elongation % | 570 | 570 | 550 | 540 |
| Mooney scorch time at 135°C (minutes) | 9.5 | 10.3 | 10.5 | 12.5 |

*Based upon the total weight of rubber in the composition.

The above results indicate that the compositions of this invention may be prepared by blending preformed saturated and unsaturated components.

Examples 13 and 14 and Comparative Experiments D and E

Several compositions were prepared employing blends of highly unsaturated nitrile rubber (acrylonitrile content 33%) and the EPDM described in Examples 1—6 above. The composition of Example 13 was prepared in accordance with the method of Examples 1—6, except that nitrile rubber was employed in place of natural rubber. The composition of Example 14 was prepared in accordance with the process of Examples 10—12 except that the highly unsaturated rubber component comprised nitrile rubber in place of natural rubber and butadiene rubber.

The compositions were cured at 171°C for 20 minutes, and their physical properties determined as described above. The results of such determination are shown in Table IV. As a comparison, samples made up of the highly unsaturated component of Example 14 (Comparative Experiment D) and of the saturated component of Example 14 (Comparative Experiment E) were similarly cured and tested. The results of this testing are also indicated in Table IV.

TABLE IV
Curing of nitrile rubber/EPDM composition

| Example | D | E | 13 | 14 |
|---|---|---|---|---|
| Nitrile rubber | 100 | — | 50 | — |
| EPDM | — | 100 | 50 | — |
| N330 carbon black | 40 | 40 | 40 | — |
| Zinc oxide | 3.0 | 3.0 | 3.0 | — |
| Stearic acid | 1.0 | 1.0 | 1.0 | — |
| Sulfur | 1.5 | — | 0.75 | — |
| N-t-butyl-2-benzothia-zole sulfenamide | 0.7 | — | 0.35 | — |
| Dicumyl peroxide | — | 7.0 | 3.5 | — |
| Component F | — | — | — | 73.0 |
| Component G | — | — | — | 75.5 |
| Gram-atoms sulfur per mole peroxide | — | — | 6.03 | 6.03 |
| Tensile strength, Kg/cm$^2$ (psi) | 261 (3730) | 206 (2940) | 239 (3420) | 245 (3500) |
| 300% Modulus, Kg/cm$^2$ (psi) | 118 (1680) | — (—) | 142 (2030) | 133 (1900) |
| Elongation, % | 520 | 230 | 450 | 460 |
| Hardness, shore A | 70 | 66 | 68 | 69 |

The above data indicate highly unsaturated nitrile rubbers may be cocured with saturated rubbers employing the process of this invention.

Examples 15—18 and Comparative Experiment H

Employing a process and components identical to those employed in Examples 1—6, several rubber compositions were prepared employing the following parts by weight:

# EP 0 171 154 B1

| Example | 15 | 16 | 17 | 18 | F | G |
|---|---|---|---|---|---|---|
| Natural rubber | 50 | 50 | 50 | 50 | 50 | 50 |
| EPDM | 50 | 50 | 50 | 50 | 50 | 50 |
| N326 Carbon black | 50 | 50 | 50 | 50 | 50 | 50 |
| Antioxidant | 2 | 2 | 2 | 2 | 2 | 2 |
| Zinc oxide | 3 | 3 | 3 | 3 | 3 | 3 |
| Stearic acid | 1 | 1 | 1 | 1 | 1 | 1 |
| Extender oil | 7.5 | 7.5 | 7.5 | 7.5 | 7.5 | 7.5 |
| Sulfur | 1.0 | 1.5 | 1.8 | 1.0 | 0.5 | 1.0 |
| Sulfur cure accelerator | 0.75 | 1.13 | 1.35 | 1.5 | 0.38 | — |
| Dicumylperoxide (40% active) | 3.50 | 1.75 | 0.3 | 3.5 | 5.25 | 7.0 |

The compositions were cured at 171°C for 20 minutes and their physical properties measured as above. The results of such testing are shown in Table V.

### TABLE V
### Effect of sulfur/peroxide ratio

| Example | 15 | 16 | 17 | 18 | F | G |
|---|---|---|---|---|---|---|
| Gram-atoms sulfur per mole peroxide | 6.03 | 18.1 | 126.8 | 6.03 | 2.0 | 3.02 |
| Tensile strength, Kg/cm² (psi) | 185 (2645) | 190 (2720) | 171 (2450) | 193 (2765) | 201 (2880) | 199 (2840) |
| 300% Modulus, Kg/cm² (psi) | 71 (1020) | 69 (990) | 74 (1065) | 89 (1270) | 72 (1025) | 66 (940) |
| Elongation, % | 610 | 610 | 590 | 550 | 600 | 620 |
| Hardness, shore A | 61 | 61 | 62 | 62 | 59 | 59 |
| Mooney scorch at 135°C (in minutes) | 9 | 10.8 | 12.5 | 9.0 | 7.5 | 6.5 |

The above results indicate that increased Mooney scorch times are provided by employing the sulfur-to-peroxide ratios of this invention relative to those ratios disclosed in the prior art.

## Claims

1. A rubber composition characterised in that it is produced by curing a blend comprising:
(A) at least one highly unsaturated rubber having an iodine number of 50 or more;
(B) at least one saturated rubber having an iodine number of less than 50; and
(C) an effective amount of a curing agent comprising:
(i) sulfur;
(ii) at least one sulfur cure accelerator;
(iii) at least one peroxide curative; and
(iv) zinc oxide;
wherein between 5 and 150 gram-atoms of sulfur per mole of peroxide are present.

2. A composition according to claim 1 characterised in that between 6 and 14 gram atoms of sulfur per mole of peroxide is present.

3. A composition according to claim 2 characterised in that component (A) is a diene rubber and component (B) is an ethylene-propylene non-conjugated diene terpolymer.

4. A composition according to any of the preceding claims characterised in that component (A) is at

9

least one member selected from natural rubber, cis-polyisoprene rubber, polybutadiene rubber, poly(styrene - butadiene) rubber and poly(acrylonitrile - butadiene) rubber.

5. A composition according to any of the preceding claims characterised in that component (B) is an ethylene - propylene - (5 - ethylidene - 2 - norbornene) terpolymer.

6. A composition according to any of the preceding claims characterised in that the sulfur cure accelerator is at least one member selected from thioureas, guanidine derivatives, xanthates, dithiocarbamates, thiuramsulfides, heterocyclics and sulfenamides.

7. A composition according to claim 6 characterised in that the sulfur cure accelerator is a thiazole or sulfenamide sulfur cure accelerator.

8. A composition according to any of the preceding claims characterised in that the peroxide curative is at least one member selected from benzoyl peroxide, 1,3 - bis(t - butylperoxyisopropyl)benzene, butyl 4,4 - bis(t - butylperoxy)valerate, p - chlorobenzoyl peroxide, cumene hydroperoxide, t-butyl cumyl peroxide, t-butyl perbenzoate, di - t - butyl peroxide, dicumyl peroxide, 2,5 - dimethyl - 2,5 - di - t - butylperoxyhexane, 2,5 - dimethyl - 2,5 - di - t - butyl - peroxyhex - 3 - yne and 4 - methyl - 2,2 - di - t - butylperoxypentane.

9. A composition according to any of the preceding claims characterised in that the sulfur cure accelerator is N - t - butyl - 2 - benzothiazole sulfenamide, tetramethylthiuram monosulfide, benzothiazole disulfide or di - o - tolylguanidine and the peroxide curative is dicumyl peroxide.

10. A process for producing a cured rubber composition characterised in that the process comprises the steps of:
(I) preparing a blend as defined in any preceding claims; and
(II) subjecting said blend to curing conditions.

11. A process according to claim 10 characterised in that step (II) comprises the substeps of:
(1) blending unsaturated rubber (A) with saturated rubber (B) to form a mixture; and
(2) blending the mixture of substep (1) with curing agent (C).

12. A process according to claim 10 characterised in that the step (1) comprises the substeps of:
(1) forming a saturated component comprising at least one saturated rubber;
(2) forming a highly unsaturated component comprising at least one highly unsaturated rubber; and
(3) blending a mixture of said saturated component and said highly unsaturated component.

## Patentansprüche

1. Kautschukzusammensetzung, dadurch gekennzeichnet, daß sie durch Vulkanisieren einer Mischung enthaltend

(A) mindestens einen hoch ungesättigten Kautschuk mit einer Jodzahl von 50 oder mehr,
(B) mindestens einen gesättigten Kautschuk mit einer Jodzahl von weniger als 50, und
(C) einer wirksamen Menge eines Vulkanisiermittels enthaltend
(I) Schwefel,
(II) mindestens einen Schwefelvulkanisierbeschleuniger,
(III) mindestens ein Peroxidvulkanisationsmittel, und
(IV) Zinkoxid,
worin zwischen 5 und 150 Gramm-Atom Schwefel pro Mol Peroxid vorliegen, hergestellt wird.

2. Zusammensetzung nach Anspruch 1, dadurch gekennzeichnet, daß zwischen 6 und 14 Gramm-Atom Schwefel pro Mol Peroxid vorliegen.

3. Zusammensetzung nach Anspruch 2, dadurch gekennzeichnet, daß die Komponente (A) ein Dienkautschuk und die Komponente (B) ein Ethylen - Propylen - nicht konjugiertes Dien-Terpolymer sind.

4. Zusammensetzung nach einem der vorhergehenden Ansprüche, dadurch gekennzeichnet, daß die Komponente (A) aus mindestens einem der Bestandteile Naturkautschuk, cis - Polyisoprenkautschuk, Polybutadienkautschuk, Poly(styrolbutadien) - Kautschuk und Poly(acrylnitril - butadien) - Kautschuk ausgewählt ist.

5. Zusammensetzung nach einem der vorhergehenden Ansprüche, dadurch gekennzeichnet, daß die Komponente (B) ein Ethylen - Propylen - (5 - ethyliden - 2 - norbonen) - Terpolymer ist.

6. Zusammensetzung nach einem der vorhergehenden Ansprüche, dadurch gekennzeichnet, daß der Schwefelvulkanisierbeschleuniger mindestens ein Bestandteil ausgewählt aus Thioharnstoffen, Guanidinderivaten, Xanthaten, Dithiocarbamaten, Thiuramsulfiden, Heterozyklen und Sulfenamiden ist.

7. Zusammensetzung nach Anspruch 6, dadurch gekennzeichnet, daß der Schwefelvulkanisierbeschleuniger ein Thiazol- oder Sulfenamid - Schwefelvulkanisierbeschleuniger ist.

8. Zusammensetzung nach einem der vorhergehenden Ansprüche, dadurch gekennzeichnet, daß das Peroxidvulkanisationsmittel mindestens ein Bestandteil ausgewählt aus Benzoylperoxid, 1,3 - Bis(t - butylperoxyisopropyl)benzol, Butyl - 4,4 - bis(t - butylperoxy)valerate, p - Chlorbenzoylperoxid, Cumolhydroperoxid, t - Butylcumylperoxid, t - Butylperbenzoat, Di - t - Butylperoxid, Dicumylperoxid, 2,5 - Dimethyl - 2,5 - di - t - butylperoxyhexan, 2,5 - Dimethyl - 2,5 - di - t - butylperoxyhex - 3 - yn und 4 - Methyl - 2,2 - di - t - butylperoxypentan ist.

9. Zusammensetzung nach einem der vorhergehenden Ansprüche, dadurch gekennzeichnet, daß der Schwefelvulkanisierbeschleuniger N - t - butyl - 2 - benzothiazolsulfenamid, Tetramethylthiurammono-

10

sulfid, Benzothiazoldisulfid oder Di - o - tolylguanidin und das Peroxidvulkanisationsmittel Dicumylperoxid sind.

10. Verfahren zur Herstellung einer vulkanisierten Kautschukzusammensetzung, dadurch gekennzeichnet, daß das Verfahren die Verfahrensstufen enthält

(I) Herstellen einer Mischung nach einem der vorhergehenden Ansprüche, und

(II) Unterwerfen der Mischung den Vulkanisationsbedingungen.

11. Verfahren nach Anspruch 10, dadurch gekennzeichnet, daß die Verfahrensstufe (II) die Stufen enthält

(1) Vermischen eines ungesättigten Kautschuks (A) mit einem gesättigten Kautschuk (B) unter Ausbildung einer Mischung, und

(2) Vermischen der Mischung von Stufe (1) mit dem Vulkanisiermittel (C).

12. Verfahren nach Anspruch 10, dadurch gekennzeichnet, daß die Verfahrensstufe (1) die Stufen enthält

(1) Bilden einer gesättigten Komponente enthaltend mindestens einen gesättigten Kautschuk,

(2) Bilden einer hoch ungesättigten Komponente enthaltend mindestens einen hoch ungesättigten Kautschuk, und

(3) Vermischen einer Mischung der gesättigten Komponente und der hoch ungesättigten Komponente.

**Revendications**

1. Composition de caoutchouc, caractérisée en ce qu'elle est produite par vulcanisation d'un mélange comprenant:

(A) au moins un caoutchouc très insaturé ayant un indice d'iode de 50 ou plus,

(B) au moins un caoutchouc saturé ayant un indice d'iode de moins de 50; et

(C) une quantité efficace d'un agent vulcanisant comprenant:

(i) du soufre;

(ii) au moins un accélérateur de vulcanisation au soufre;

(iii) au moins un agent vulcanisant de peroxyde; et

(iv) de l'oxyde de zinc;

où il y a entre 5 et 150 atomes-grammes de soufre par mole de peroxyde.

2. Composition selon la revendication 1 caractérisée en ce qu'il y a entre 6 et 14 atomes-grammes de soufre par mole de peroxyde.

3. Composition selon la revendication 2 caractérisée en ce que le composant (A) est un caoutchouc diène et le composant (B) est un terpolymère éthylène - propylène - diène non conjugué.

4. Composition selon l'une quelconque des revendications précédentes caractérisée en ce que le composant (A) est au moins un élément choisi parmi le caoutchouc naturel, le caoutchouc de cis-polyisoprène, le caoutchouc de polybutadiène, le caoutchouc de poly(styrène - butadiène) et le caoutchouc de poly(acrylonitrile - butadiène).

5. Composition selon l'une quelconque des revendications précédentes caractérisée en ce que le composant (B) est un terpolymère d'éthylène - propylène - (5 - éthylidène - 2 - norbornène).

6. Composition selon l'une quelconque des revendications précédentes caractérisée en ce que l'accélérateur de vulcanisation au soufre est au moins un élément choisi parmi les thiourées, les dérivés de guanidine, les xanthates, les dithiocarbamates, les sulfures de thiuram, les hétérocycliques et les sulfénamides.

7. Composition selon la revendication 6 caractérisée en ce que l'accélérateur de vulcanisation au soufre est un accélérateur de vulcanisation au soufre de thiazole ou de sulfénamide.

8. Composition selon l'une quelconque des revendications précédentes caractérisée en ce que l'agent vulcanisant au peroxyde est au moins un élément choisi parmi le peroxyde de benzoyle, le 1,3 - bis(t - butylperoxyisopropyl)benzène, le 4,4 - bis(t - butylperoxy)valérate de butyle, le peroxyde de p - chlorobenzoyle, l'hydroperoxyde de cumène, le peroxyde de t - butylcumyle, le perbenzoate de t-butyl, le peroxyde de di - t - butyle, le peroxyde de dicumyle, le 2,5 - diméthyl - 2,5 - di - t - butylperoxyhexane, la 2,5 - diméthyl - 2,5 - di - t - butylperoxyhex - 3 - yne et le 4 - méthyl - 2,2 - di - t - butylperoxypentane.

9. Composition selon l'une quelconque des revendications précédentes caractérisée en ce que l'accélérateur de vulcanisation au soufre est le N - t - butyl - 2 - benzothiazole sulfénamide, le monosulfure de tétraméthylthiuram, le disulfure de benzothiazole ou la di - o - tolylguanidine et l'agent vulcanisant de peroxyde est le peroxyde de dicumyle.

10. Procédé de préparation d'une composition de caoutchouc vulcanisé, caractérisé en ce que le procédé comprend les étapes de:

(I) préparer un mélange tel que défini selon l'une quelconque des revendications précédentes; et

(II) soumettre ledit mélange à des conditions de vulcanisation.

11. Procédé selon la revendication 10 caractérisé en ce que l'étape (ii) comprend les sous-étapes de:

(1) mélanger le caoutchouc insaturé (A) avec le caoutchouc saturé (B) pour former un mélange; et

(2) mélanger le mélange de la sous-étape (1) avec l'agent vulcanisant (C).

12. Procédé selon la revendication 10 caractérisé en ce que l'étape (1) comprend les sous-étapes de:
(1) former un composant saturé comprenant au moins un caoutchouc saturé;
(2) former un composant très insaturé comprenant au moins un caoutchouc très insaturé; et
(3) mélanger un mélange dudit composant saturé et dudit composant très insaturé.